# EUROPÄISCHE PATENTSCHRIFT

(11) **EP 0 948 790 B1**
(45) Veröffentlichungstag und Bekanntmachung des Hinweises auf die Patenterteilung: **07.03.2001**
(21) Anmeldenummer: 97954714.8
(22) Anmeldetag: 29.12.1997
(51) Int. Cl.: G11B 23/04

(54) **AUSWECHSELBARES PLATTENMAGAZIN FÜR PLATTEN-WECHSLER ODER DERGLEICHEN**
REMOVABLE DISC MAGAZINE FOR A DISC CHANGER OR THE LIKE
CHARGEUR DE DISQUES INTERCHANGEABLE POUR CHANGEUR DE DISQUES OU ANALOGUE

(30) Priorität: 03.01.1997 DE 19700087; 24.02.1997 DE 19707208
(43) Veröffentlichungstag der Anmeldung: 13.10.1999
(73) Patentinhaber: NSM Storage GmbH, 55411 Bingen (DE)
(72) Erfinder: PITZ, Ulrich, D-55437 Ockenheim (DE); GÖRNER, Martin, D-55425 Waldalgesheim (DE); SCHELLONG, Horst, D-55129 Mainz (DE); HEIDERSBERGER, Börge, D-55411 Bingen (DE); THEIL, Wolfgang, D-55144 Waldlaubersheim (DE)
(74) Vertreter: Becker, Bernd, Dipl.-Ing.
(86) Internationale Anmeldenummer: DE9703028
(87) Internationale Veröffentlichungsnummer: WO9829865

(56) Entgegenhaltungen:
- EP-A- 0 265 167
- EP-A- 0 446 409
- EP-A- 0 578 918
- WO-A-86/01631
- US-A- 4 989 191

## Beschreibung

Die Erfindung bezieht sich auf ein auswechselbares Plattenmagazin mit einem mit einer Steuereinheit zu verbindenden elektronischen Speichermedium für Daten, zum Einsetzen in ein Gerätegehäuse von Platten-Wechslern, Plattenabspielgeräten, Datenverarbeitungsanlagen oder dergleichen mit einem Gehäuserahmen, in dem eine Vielzahl übereinanderliegend in Aufnahmefächern gelagerte, jeweils eine Platte aufnehmende Plattenhalter angeordnet sind, und einem mit dem Gehäuserahmen verbundenen Deckel.

Es gibt eine Vielzahl von Geräten und Anlagen, in denen auswechselbare, insbesondere Compact-Discs enthaltende Plattenmagazine verwendet werden. Solche Plattenmagazine weisen eine Mehrzahl von übereinanderliegend angeordneten Aufnahmefächern auf, in denen jeweils ein eine Platte aufnehmender Plattenhalter angeordnet ist. So kommen vor allem Platten-Wechsler, Plattenabspielgeräte und Datenverarbeitungsanlagen in Betracht. Besonders Datenarchivierungssysteme, bei denen extrem hohe Mengen von Informationen und Daten auf den Platten gespeichert werden, sind zunehmend in Anwendung, da auf den Platten-Speichermedien ganze Bibliotheken gespeichert werden können. Um vor allem in Datenverarbeitungsanlagen die auf den Platten gespeicherten Informationen und Daten auslesen und verarbeiten bzw. auf diese einschreiben zu können, ist häufig der Wechsel der Platten und damit der entsprechenden Plattenmagazine im jeweiligen Gerät erforderlich. Dies verlangt eine sichere und schnelle Handhabung der Plattenmagazine. Zunehmend werden auch Geräte in Datenverarbeitungsanlagen und Archivierungssystemen verwendet, in denen mehrere Plattenmagazine aufgenommen sind.

Bei der Vielzahl der einem System zur Verfügung stehenden Plattenmagazine und der erheblich größeren Zahl von Platten (CD-Platten) wird leicht der Überblick über die Plattenmagazine und die Platten sowie deren Informationsinhalte verloren. Daher werden die Plattenmagazine bzw. Platten üblicherweise manuell markiert, z.B. durch Beschriftung mit Spezialstiften oder mit Etiketten, die mit willkürlich festgelegten Identifikationsmerkmalen versehen werden. Bei großen Datenverarbeitungs- und Archivierungssystemen wird es dabei häufig vorkommen, daß die bisher verwendete Identifikationsmethode durch die anfallende ungeheuer große Datenmenge nach kurzer Zeit bereits überholt ist und eine neue Identifikationsmethode eingeführt werden muß. Darüber hinaus ist es sehr schwierig Plattenmagazine und/oder Platten in einem großen Netzwerk zu verwenden und auszutauschen, ohne daß die Übersicht verloren geht.

Aus der EP-A-0 578 918 ist ein auswechselbares Plattenmagazin bekannt, das mit einem Speichermedium versehen ist. Dieses Magazin weist Kontakte zur Herstellung einer Verbindung mit dem Speichermedium auf, wobei ein Datenaustausch zwischen dem Speichermedium und einer Steuereinheit möglich ist und das Speichermedium einen Identifikationscode enthält. Im weiteren ist aus der EP-A-0 446 409 ein Plattenmagazin mit einem als Magnetstreifen ausgeführten Speichermedium bekannt, das durch ein elektronisches Speichermedium ersetzt werden kann.

Es ist Aufgabe der Erfindung, ein auswechselbares Plattenmagazin der eingangs genannten Art zu schaffen, das beim Einsetzen in das Gerätegehäuse eine zuverlässige sowie kostengünstige Verbindung zur Steuereinheit schafft, wobei das Speichermedium vor Beschädigung geschützt ist.

Erfindungsgemäß wird die Aufgabe dadurch gelöst, daß in dem Deckel des Plattenmagazines das Speichermedium mit einer zugeordneten Kontaktbrücke angeordnet ist, die beim Einschieben des Plattenmagazines in das Gerätegehäuse mit einem gestellfest zum Gerätegehäuse angebrachten federnden, an die Steuereinheit angeschlossenen Kontaktelement verbunden ist.

Die im Speichermedium enthaltenen Daten, insbesondere die Stammdaten zu einem Plattenmagazin, können in einer zentralen Datenbank innerhalb eines Systems abgelegt werden, so daß beim Einsetzen des Plattenmagazins in ein entsprechendes Gerät oder Gerätesystem die jeweilige Identifikationskennung des Plattenmagazins und gegebenenfalls der Platten in der Datenbank gesucht und umgesetzt werden können. Des weiteren eignet sich der Deckel besser zur Unterbringung des Speichermediums als der Innenraum des Plattenmagazins, in dem die Platten lagern.

In Weiterbildung der Erfindung ist dem Speichermedium ein eindeutiger Identifikationscode zugeordnet. Darüber hinaus können von der Steuereinheit eine Datenmenge in das bzw. aus dem Speichermedium eingeschrieben und ausgelesen werden.

Ein eindeutiger Identifikationscode, beispielsweise eine numerische oder alphanumerische Serienbezeichnung, die im Speichermedium gespeichert ist, kann somit von der Steuereinheit des Plattenwechslers, des Plattenabspielgerätes, der Datenverarbeitungs- oder Datenarchivierungsanlage zuverlässig erkannt und ausgewertet werden. Dabei ist es möglich, daß Plattenmagazin mit einer in einem lokal begrenzten oder gar weltweiten Netzwerk eindeutigen Identifikationskennung zu versehen. Der Austausch der Plattenmagazine kann damit in einem Netzwerksystem weltweit vorgenommen werden. Darüber hinaus können in das Speichermedium Informationsdaten über die im Plattenmagazin befindlichen Datenträgerplatten eingeschrieben und von der Steuereinheit des entsprechenden Gerätes wieder ausgelesen werden. Dadurch können alle Informationen verarbeitenden Geräte das jeweilige Plattenmagazin mit den zugehörigen Platten eindeutig erkennen. Dem Anwender kann zusätzlich die Möglichkeit eingeräumt werden, selbst Daten im Speichermedium des Plattenmagazins abzulegen. Beispielsweise können Informationen zum Inhalt der Informationen der im Plattenmagazin aufgenommenen Platten oder auch Inhaltsverzeichnisse zu diesen Platten eingeschrieben werden. Da in einem Netzwerk mehrere Geräte und Anlagen miteinander verbunden sind, kann z.B. ein Servergerät in bestimmten Zeitabständen abfragen, ob ein und welches Plattenmagazin in welchem Gerät oder einer Anlage eingesetzt ist und dieses Plattenmagazin einem Gerät oder einer Anlage im Netzwerksystem beliebig zuordnen. Darüber hinaus können die Plattenmagazine und die darin aufgenommenen Platten bestimmten Themen oder einer speziellen Software zugeordnet werden. Eine externe Speicherverwaltung kann auch dadurch stattfinden, daß außerhalb des jeweiligen Gerätes ein elektronischer Abtaster die im Speichermedium enthaltenen Informationen ausliest. Die im Speichermedium des Plattenmagazins eingeschriebenen Informationen können auch darüber Auskunft geben, welche Art von Plattentypen im Plattenmagazin aufgenommen sind, beispielsweise nur lesbare oder nur beschreibbare Platten usw.. Dadurch erkennt das jeweilige Gerät automatisch, welcher Art der Benutzerzugriff auf die Platten ist. Neben der auf den Platten gespeicherten Informationen können z.B. auch Benutzerzugriffsrechte im Speichermedium des Plattenmagazins gespeichert werden.

Die Kontaktbrücke wird vorzugsweise aus zwei zueinander beabstandeten, einen gepolten elektrischen Kontakt herstellenden Kontaktfedern gebildet, deren jeweils eines Ende mit dem Speichermedium verbunden ist. Das am Gerätegehäuse angeordnete Kontaktelement umfaßt zwei zueinander beabstandete, zu den Kontaktfedern im Deckel des Plattenmagazins korrespondierende Spannfedern, die mit Kontakten einer Leiterplatte der Steuereinheit im Gerätegehäuse verbunden sind. Durch diese Maßnahmen können die freien, von der Leiterplatte der Steuereinheit entfernten Enden der Spannfedern bei in das Gerätegehäuse eingeschobenem Plattenmagazin an den freien, vom Speichermedium entfernten Enden der Kontaktfedern in Anlage gebracht werden, um die Verbindung zwischen dem Speichermedium des Plattenmagazins und der Steuereinheit des Gerätes oder der Anlage herzustellen.

Nach einer Weiterbildung der erfindungsgemäßen Lösung ist das elektronische Speichermedium als Speicherchip ausgebildet. Der Innenraum des Deckels des Plattenmagazins ist mit einer Aufnahmekammer versehen, in die der Speicherchip eingesetzt wird.

Der der Erfindung zugrunde liegende Gedanke wird in der nachfolgenden Beschreibung anhand eines Ausführungsbeispieles, das in der Zeichnung dargestellt ist, näher beschrieben. Es zeigt:
- Fig. 1: eine Draufsicht eines erfindungsgemäßen Plattenmagazins im Teilschnitt entlang der Linie I-I nach Fig. 2 ohne Platten enthaltende Plattenhalter,
- Fig. 2: eine Rückansicht des Plattenmagazins im Teilschnitt entlang der Linie II-II nach Fig. 1 ohne Platten enthaltende Plattenhalter und
- Fig. 3: eine Seitenansicht des Plattenmagazins im Schnitt entlang der Linie III-III nach Fig. 1 mit einem strichliert gezeichneten Plattenhalter.

Das Plattenmagazin 1 weist einen Gehäuserahmen 2 und einen Deckel 3 auf. Der Gehäuserahmen 2 ist mit Ausnahme der dem Deckel 3 gegenüberliegenden Seite 4 allseitig geschlossen und besteht aus dünnem Metallblech.

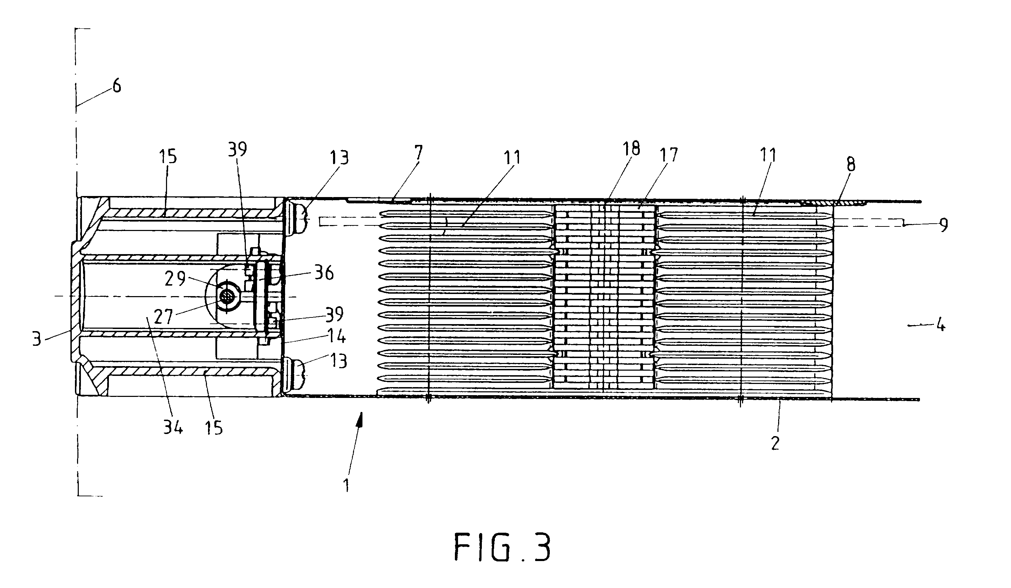

Seitlich am Gehäuserahmen 2 ist jeweils eine Führungsleiste 5 angebracht, die mit entsprechenden, nicht dargestellten Führungsschienen in einem Gerätegehäuse 6 eines Platten-Wechslers, einem Plattenabspielgerät, einer Datenverarbeitungsanlage oder dergleichen in Eingriff gebracht wird, wenn das Plattenmagazin 1 in das Gerätegehäuse 6 eingeschoben wird. Zur Versteifung des Gehäuserahmens 2 weist dieser auf zumindest einer seiner Breitseiten eine Sicke 7 auf. Des weiteren ist auf zumindest einer Breitseite des Gehäuserahmens 2 im dem Deckel 3 entgegengesetzten Bereich eine Sichtlinse 8 ausgebildet, durch welche visuell festgestellt werden kann, ob sich im Gehäuserahmen 2 Plattenhalter 9 (Fig. 3) mit einer Platte befinden.

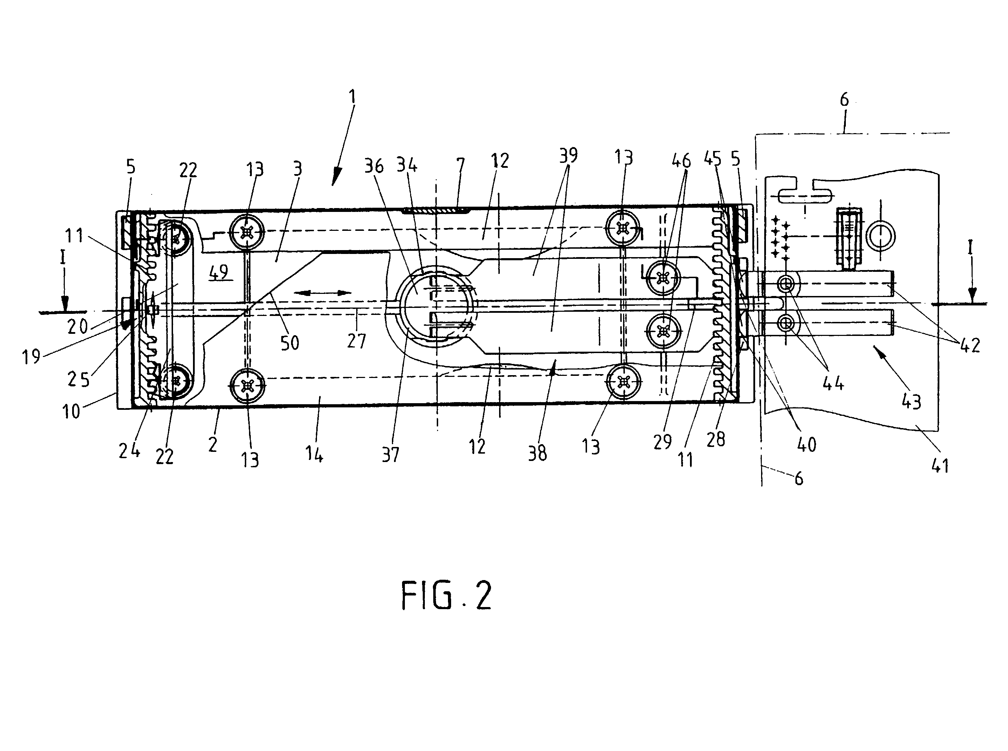

Wie insbesondere in Fig. 2 gezeigt ist, sind an den seitlichen Wänden 10 des Gehäuserahmens 2 jeweils eine Vielzahl übereinanderliegend angeordnete Aufnahmefächer 11 ausgebildet, in die jeweils ein eine Platte aufnehmender Plattenhalter 9 eingesetzt wird.

Der mit zwei Griffmulden 12 versehen Deckel 3 wird mittels Schraubverbindungen 13 mit der stirnseitigen Wandung 14 verbunden. Die Schraubenschäfte werden hierbei in Schraubenaufnahmen 15 eingeschraubt, die einstückig mit dem aus Kunststoff bestehenden Deckel 3 in dessen Innenraum 16 ausgebildet sind.

Die Aufnahmefächer 11 für die Plattenhalter 9 sind in ihrem mittleren Bereich durch eine Anzahl von schmalen Halteblattfedern 17 unterbrochen, die die Plattenhalter 9 in ihrer Mittenlage durch geringen Anpreßdruck halten. Der Anpreßdruck der Halteblattfedern 17 wird durch eine unter diesen angeordnete Moosgummi-Rundschnur 18 unterstützt.

Im Innenraum 16 des Deckels 3 befindet sich ein Verriegelungselement 19, das als Blattfeder 20 ausgebildet ist. Das eine Ende 21 der Blattfeder 20 ist über zwei Schraubverbindungen 22 an der Innenseite des Deckels 3 verschraubt. Das andere Ende 23 der Blattfeder 20 bildet eine gefalzte Kante 24, die eine Breite hat, die etwa der Höhe des Plattenmagazins 1 entspricht. In ihrer Mitte besitzt die Blattfeder einen Durchbruch 25, durch den die Spitze 26 einer sich quer durch den Innenraum 16 des Deckels 3 erstreckenden Stößelstange 27 ragt.

Das andere Ende der Stößelstange 27 mündet in einem Schieber 28, der mit einer Stößelstangenaufnahme 29 versehen ist. Der Schieber 28 wird in einer in der Seitenwand 10 des Gehäuserahmens 2 eingebrachten Aussparung 30 geführt. Darüber hinaus ist am Schieber 28 eine schräg verlaufende Anschlagfläche 31 ausgebildet.

Im Gerätegehäuse 6 des entsprechenden Aufnahmegerätes für das Plattenmagazin 1 ist gestellfest ein Auslöser 32 angeordnet, dessen Nase 33 über das Gerätegehäuse 6 derart hinausragt, daß diese beim Einschieben des Plattenmagazins 1 in das Gerätegehäuse 6 an eine Anschlagfläche 31 des Schiebers 28 stößt und dabei den Schieber 28 mit der Stößelstange 27 gegen die Federkraft der Blattfeder 20 bewegt.

Im Innenraum 16 des Deckels 3 ist mittig eine rohrstückförmige, einstückig mit dem Deckel 3 ausgebildete Aufnahmekammer 34 ausgeformt. Im zum Gehäuserahmen 2 des Plattenmagazins 1 ragenden Endbereich der Aufnahmekammer 34 ist ein als Knopfzelle 35 ausgebildetes Speichermedium 36 befestigt. Mittels einem Isolierring 37 aus Kunststoff ist das Speichermedium 36 gegenüber dem metallischen Gehäuserahmen 2 isoliert. Eine Kontaktbrücke 38 erstreckt sich vom Speichermedium 36 hin zu einer Seitenwand 10 des Plattenmagazins 1. Diese Kontaktbrücke 38 besteht aus zwei im wesentlichen parallel zueinander verlaufenden Kontaktfedern 39, von denen jeweils ein Ende an einer Seite des Speichermediums 36 durch die Vorspannung der Kontaktfedern 39 anliegt. Die anderen Enden 40 liegen an der Seitenwand 10 des Plattenmagazins 1 an.

Im Gerätegehäuse 6 ist gestellfest eine Leiterplatte 41 angeordnet, die Bestandteil einer nicht dargestellten Steuereinheit des Informationen verarbeitenden Gerätes ist. Mit der Leiterplatte 41 ist ein aus zwei parallel zueinander verlaufenden, mäanderförmig gebogenen Spannfedern 42 bestehendes Kontaktelement 43 verbunden. Die Spannfedern 42 sind an ihrem einen Ende mit Kontaktpunkten 44 an der Leiterplatte 41 befestigt. Die anderen Enden 45 der Spannfedern 42 münden in einer Öffnung des Gerätegehäuses 6 und kommen mit den Enden 40 der Kontaktfedern 39 in Anlage, wenn das Plattenmagazin 1 in das Gerätegehäuse 6 eingeschoben ist. Die Kontaktfedern 39 der Kontaktbrücke 38 im Deckel 3 sind mittels Schraubverbindungen 46 über an den Deckel 3 angeformte Schraubenaufnahmen 47 mit diesem verbunden.

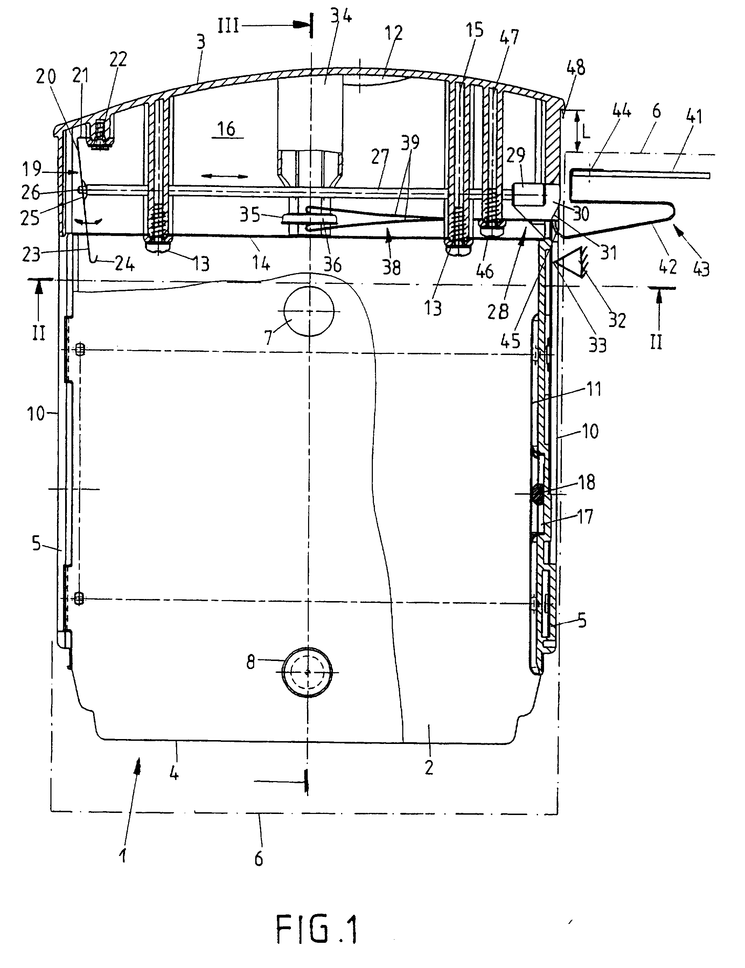

Im noch nicht vollständig eingeschobenen Zustand des Plattenmagazins 1, wie in Fig. 1 gezeigt, greift die Kante 24 der Blattfeder 20 in entsprechende, nicht dargestellte Ausnehmungen der im Plattenmagazin 1 aufgenommenen Plattenhalter 9 ein. Wird nun das Plattenmagazin 1 vollständig in das Gerätegehäuse 6 eingeschoben, bis eine am Deckel 3 ausgebildete Schulter 48 am Gerätegehäuse 6 anstößt, hat der Schieber 28 über die Stößelstange 27 die Blattfeder 20, wie durch die Doppelpfeile in den Fig. 1 und 2 angezeigt, in Richtung der entsprechenden Seitenwand 10 des Gehäuserahmens 2 bzw. des Deckels 3 gedrückt. Dadurch kommt die Kante 24 der Blattfeder 20 außer Eingriff mit den Ausnehmungen der Plattenhalter 9, wodurch diese freigegeben werden. Gemäß Fig. 1 ist das Plattenmagazin 1 zwar schon teilweise in das Gerätegehäuse 6 eingeschoben, jedoch muß das Plattenmagazin 1 noch den Weg L zurücklegen, während der beschriebene Entriegelungsvorgang der Blattfeder 20 von den Plattenhaltern 9 stattfindet.

Dadurch gelangen zwangsläufig die Enden 40 der Kontaktfedern 39 der im Deckel 3 des Plattenmagazins 1 befindlichen Kontaktbrücke 38 mit den Enden 45 der Spannfedern 42 des an der Leiterplatte 41 angeformten Kontaktelementes 43 in Anlage. Somit wird eine elektrische Verbindung zwischen dem Speichermedium 36 und der Steuereinheit des entsprechenden Gerätes hergestellt. Nun können die im Speichermedium 36 gespeicherten Daten ausgelesen oder neue Daten in das Speichermedium 36 übertragen werden.

Soll das Plattenmagazin 1 wieder aus dem Gerätegehäuse 6 entfernt werden, betätigt die im Gerätegehäuse 6 untergebrachte Steuereinheit den Auslöser 32, so daß sich dessen Nase 33 zurückzieht. Dadurch wird durch die Federkraft der Blattfeder 20 die Stößelstange 27 und damit der Schieber 28 in seine Ausgangsstellung zurückbewegt, wobei die Kante 24 der Blattfeder 20 wieder in die Ausnehmungen der Plattenhalter 9 eingreift und diese arretiert. Gleichzeitig gelangen die Enden 40 der Kontaktfedern 39 im Deckel 3 außer Eingriff mit den Enden 45 der Spannfedern 42 im Gerätegehäuse 6. Dadurch wird die elektrische Verbindung zwischen dem Speichermedium 36 und der Steuereinheit des Gerätes unterbrochen.

Konstruktionsbedingt erfolgt die Montage des Verriegelungselementes 19 mit der Stößelstange 27 und dem Schieber 28 im Innenraum 16 des Deckels 3, bevor dieser mittels der Schraubverbindungen 13 mit der Wandung 14 des Gehäuserahmens 2 des Plattenmagazins 1 verbunden wird. Damit der Dekkel 3 mit der darüber hinausragen Blattfeder 20 auf einfache Weise an die Wandung 14 des Gehäuserahmens 2 angesetzt werden kann, ist die Wandung 14 mit einer Durchtrittsöffnung 49 versehen, die eine Schräge 50 aufweist. Durch leichtes Anwinkeln des Deckels 3 bei dessen Anlegen an die Wandung 14 des Gehäuserahmens 2 gelangt das vordere Ende 23 der Blattfeder 20 problemlos durch die Durchtrittsöffnung 35, so daß der Deckel 3 mit dem Gehäuserahmen 2 verschraubt werden kann. In umgekehrter Weise wird der Deckel 3 vom Gehäuserahmen 2 des Plattenmagazins 1 entfernt. Damit wird ein leichtes Austauschen des Speichermediums 36 im Bedarfsfall möglich.

### Liste der Bezugszeichen

- 1: Plattenmagazin
- 2: Gehäuserahmen
- 3: Deckel
- 4: Seite
- 5: Führungsleiste
- 6: Gerätegehäuse
- 7: Sicke
- 8: Sichtlinse
- 9: Plattenhalter
- 10: Seitenwand
- 11: Aufnahmefächer
- 12: Griffmulde
- 13: Schraubverbindung
- 14: Wandung
- 15: Schraubenaufnahme
- 16: Innenraum
- 17: Halteblattfedern
- 18: Rundschnur
- 19: Verriegelungselement
- 20: Blattfeder
- 21: Ende
- 22: Schraubverbindung
- 23: Ende
- 24: Kante
- 25: Durchbruch
- 26: Spitze
- 27: Stößelstange
- 28: Schieber
- 29: Stößelstangenaufnahme
- 30: Aussparung
- 31: Anschlagfläche
- 32: Auslöser
- 33: Nase
- 34: Aufnahmekammer
- 35: Knopfzelle
- 36: Speichermedium
- 37: Isolierring
- 38: Kontaktbrücke
- 39: Kontaktfedern
- 40: Enden
- 41: Leiterplatte
- 42: Spannfedern
- 43: Kontaktelement
- 44: Kontaktpunkte
- 45: Enden
- 46: Schraubverbindung
- 47: Schraubenaufnahme
- 48: Schulter
- 49: Durchtrittsöffnung
- 50: Schräge

## Patentansprüche

1. Auswechselbares Plattenmagazin mit einem mit einer Steuereinheit zu verbindenden elektronischen Speichermedium (36) für Daten, zum Einsetzen in ein Gerätegehäuse (6) von Platten-Wechslern, Plattenabspielgeräten, Datenverarbeitungsanlagen oder dergleichen mit einem Gehäuserahmen (2), in dem eine Vielzahl übereinanderliegend in Aufnahmefächern (11) gelagerte, jeweils eine Platte aufnehmende Plattenhalter (9) angeordnet sind, und einem mit dem Gehäuserahmen (2) verbundenen Deckel (3), dadurch gekennzeichnet, daß in dem Deckel (3) des Plattenmagazines das Speichermedium (36) mit einer zugeordneten Kontaktbrücke (38) angeordnet ist, die beim Einschieben des Plattenmagazines in das Gerätegehäuse (6) mit einem gestellfest zum Gerätegehäuse (6) angebrachten federnden, an die Steuereinheit angeschlossenen Kontaktelement (43) verbunden ist.

2. Auswechselbares Plattenmagazin nach Anspruch 1, dadurch gekennzeichnet, daß dem Speichermedium (36) ein eindeutiger Identifikationscode zugeordnet ist.

3. Auswechselbares Plattenmagazin nach Anspruch 1 oder 2, dadurch gekennzeichnet, daß von der Steuereinheit eine Datenmenge in das bzw. aus dem Speichermedium (36) einschreibbar und auslesbar ist.

4. Auswechselbares Plattenmagazin nach Anspruch 1, dadurch gekennzeichnet, daß die Kontaktbrücke (38) aus zwei zueinander beabstandeten Kontaktfedern (39) besteht, deren jeweils eines Ende mit dem Speichermedium (36) verbunden ist.

5. Auswechselbares Plattenmagazin nach einem der Ansprüche 1 bis 4, dadurch gekennzeichnet, daß das am Gerätegehäuse (6) angeordnete Kontaktelement (43) aus zwei zueinander beabstandeten Spannfedern (42) besteht, die mit Kontakten (44) einer Leiterplatte (41) der Steuereinheit im Gerätegehäuse (6) verbunden sind.

6. Auswechselbares Plattenmagazin nach Anspruch 5, dadurch gekennzeichnet, daß die freien, von der Leiterplatte (41) der Steuereinheit entfernten Enden (45) der Spannfedern (42) bei in das Gerätegehäuse (6) eingeschobenem Plattenmagazin (1) an den freien, vom Speichermedium (36) entfernten Enden (40) der Kontaktfedern (39) anliegen.

7. Auswechselbares Plattenmagazin nach einem der Ansprüche 1 bis 6, dadurch gekennzeichnet, daß das elektronische Speichermedium (36) als Speicherchip ausgebildet und in einer im Innenraum (16) des Deckels (3) des Plattenmagazins (1) ausgebildeten Aufnahmekammer (34) angeordnet ist.

8. Auswechselbares Plattenmagazin nach einem der Ansprüche 1 bis 7, dadurch gekennzeichnet, daß die am Speichermedium (36) anliegenden Kontaktfedern (39) der Kontakteinheit im Innenraum (16) des Deckels (3) mit diesem mechanisch (46) verbunden sind.

## Claims

1. Interchangeable disc magazine, having an electronic storage medium (36), which is to be connected to a control unit and serves to store data, for insertion into an appliance housing (6) of disc changers, disc players, data processing systems or the like, said magazine having a housing frame (2), in which are disposed a plurality of disc holders (9), which are mounted one above the other in accommodation compartments (11) and each accommodate one disc, and a cover (3), which is connected to the housing frame (2), characterised in that the storage medium (36) is disposed, with an associated contact bridge (38), in the cover (3) of the disc magazine when the disc magazine is inserted into the appliance housing (6), said bridge being connected to a resilient contact element (43), which is mounted on the appliance housing (6) so as to be fixed to the frame, and communicating with the control unit.

2. Interchangeable disc magazine according to claim 1, characterised in that a specific identification code is associated with the storage medium (36).

3. Interchangeable disc magazine according to claim 1 or 2, characterised in that a quantity of data can be recorded in and read from the storage medium (36) by the control unit.

4. Interchangeable disc magazine according to claim 1, characterised in that the contact bridge (38) comprises two spaced-apart contact springs (39), one end of each spring being connected to the storage medium (36).

5. Interchangeable disc magazine according to one of claims 1 to 4, characterised in that the contact element (43), which is disposed on the appliance housing (6), comprises two spaced-apart tensioning springs (42), which are connected to contacts (44) of a printed circuit board (41) of the control unit in the appliance housing (6).

6. Interchangeable disc magazine according to claim 5, characterised in that the free ends (45) of the tensioning springs (42), remote from the printed circuit board (41) of the control unit, abut against the free ends (40) of the contact springs (39), remote from the storage medium (36), when the disc magazine (1) has been inserted into the appliance housing (6).

7. Interchangeable disc magazine according to one of claims 1 to 6, characterised in that the electronic storage medium (36) is configured as a memory chip and is disposed in an accommodation chamber (34) provided in the interior (16) of the cover (3) of the disc magazine (1).

8. Interchangeable disc magazine according to one of claims 1 to 7, characterised in that the contact springs (39) of the contact unit, which abut against the storage medium (36), are mechanically (at 46) connected to the cover (3) in the interior (16) thereof.

## Revendications

1. Magasin à disques échangeable comportant un support de mémoire électronique (36) pour données, à relier à une unité de commande, destiné à être inséré dans un bâti (6) de changeurs de disques, de lecteurs de disques, de systèmes de traitement de données ou similaires avec un cadre de bâti (2) dans lequel est disposée une pluralité de porte-disques (9) superposés dans des cases de réception (11), recevant chacun un disque, et un couvercle (3) relié au cadre (2) du bâti, caractérisé en ce que dans le couvercle (3) du magasin à disques, le support de mémoire (36) est disposé avec un pont de contact (38) associé qui, lorsque le magasin à disques est introduit dans le bâti (6), est relié à un élément de contact (43) élastique solidaire du bâti (6) et raccordé à l'unité de commande.

2. Magasin à disques échangeable selon la revendication 1, caractérisé en ce qu'un code d'identification univoque est affecté au support de mémoire (36).

3. Magasin à disques échangeable selon la revendication 1 ou 2, caractérisé en ce qu'à partir de l'unité de commande, il est possible d'enregistrer dans le support de mémoire (36) et d'extraire de celle-ci une quantité de données.

4. Magasin à disques échangeable selon la revendication 1, caractérisé en ce que le pont de contact (38) est constitué de deux ressorts de contact (39) espacés l'un de l'autre, dont une extrémité respective est reliée au support de mémoire (36).

5. Magasin à disques échangeable selon l'une des revendications 1 à 4, caractérisé en ce que l'élément de contact (43) disposé sur le bâti (6) est constitué de deux ressorts de tension (42) espacés l'un de l'autre, qui sont reliés à des contacts (44) d'une plaquette à circuit imprimé (41) de l'unité de commande dans le bâti (6).

6. Magasin à disques échangeable selon la revendication 5, caractérisé en ce que les extrémités libres (45) des ressorts de tension (42) éloignées de la plaquette à circuit imprimé (41) de l'unité de commande, s'appliquent, lorsque le magasin à disques (1) est introduit dans le bâti (6), sur les extrémités libres (40) des ressorts de contact (39) éloignées du support de mémoire (36) .

7. Magasin à disques échangeable selon l'une des revendications 1 à 6, caractérisé en ce que le support de mémoire électronique (36) est réalisé sous la forme d'une puce à mémoire et est disposé dans une chambre de réception (34) formée dans le volume intérieur (16) du couvercle (3) du magasin à disques (1).

8. Magasin à disques échangeable selon l'une des revendications 1 à 7, caractérisé en ce que les ressorts de contact (39) de l'unité de contact, qui s'appliquent sur le support de mémoire (36), sont reliés mécaniquement (46) au couvercle (3) dans le volume intérieur (16) de celui-ci.
